Europäisches Patentamt

European Patent Office

Office européen des brevets

(11) Publication number: **0 231 073 B1**

# EUROPEAN PATENT SPECIFICATION

(45) Date of publication of patent specification: **25.11.92**  (51) Int. Cl.5: **G01N 27/16**

(21) Application number: **87300281.0**

(22) Date of filing: **14.01.87**

(54) Apparatus for detecting gaseous hydrocarbons.

(30) Priority: **15.01.86 GB 8600858**

(43) Date of publication of application:
**05.08.87 Bulletin 87/32**

(45) Publication of the grant of the patent:
**25.11.92 Bulletin 92/48**

(84) Designated Contracting States:
**AT BE CH DE ES FR GR IT LI LU NL SE**

(56) References cited:
**DE-A- 2 714 040**
**DE-A- 3 127 431**
**FR-A- 1 373 530**
**GB-A- 1 447 488**
**US-A- 3 478 579**

(73) Proprietor: **Gas Measurement Instruments Ltd.**
**Inchinnan Estate**
**Renfrew PA4 9RG Scotland(GB)**

(72) Inventor: **McGregor, George**
**44 Bruntsfield Avenue**
**Parkhouse Estate Glasgow G53 7BO(GB)**

(74) Representative: **MacDougall, Donald Carmichael et al**
**Cruikshank & Fairweather 19 Royal Exchange Square**
**Glasgow G1 3AE, Scotland(GB)**

EP 0 231 073 B1

## Description

This invention relates to apparatus for detecting combustible gaseous hydrocarbons, such as methane, in a mixture with air.

Various forms of apparatus for detecting combustible gaseous hydrocarbons in a mixture with air are already well known and utilize Wheatstone bridges incorporating resistance elements of pellistor form. One such Wheatstone bridge comprises an arm formed by two pellistors which are generally similar in shape, volume and electrical resistance but one pellistor is provided with a catalytic coating which is effective at gas concentrations below the upper explosive limit (U.E.L.) to cause combustion of the gas on the coating thereby unbalancing the bridge by an extent dependent upon the concentration of gas. Both pellistors in this bridge are located in the gas stream. For gas concentrations substantially above the UEL the catalytic combustion effect of the coating is inhibited due to lack of oxygen and so the bridge returns to balance. In order to detect these higher levels of gas concentration, either for quantitative measurement purposes or for distinguishing that the balanced bridge condition arises from higher levels of gas rather than zero gas concentration, a second Wheatstone bridge is required, comprising an arm formed by two identical pellistors of which one is located in air out of the gas stream and the other is located in the gas stream so that the thermal conductivity of the gas stream affects the rate of heat loss from only one pellistor thereby unbalancing the second bridge by an extent dependent upon the concentration of gas. In this second bridge neither pellistor incorporates a catalytic coating.

The pellistors themselves are well known elements and, for example, are described in UK Patent Specifications 892530, 1447488 and 2044937.

It is an object of the present invention to provide an improved form of apparatus for detecting combustible gaseous hydrocarbons. An apparatus for detecting combustible gaseous hydrocarbons as defined in the preamble of claim 1 is known from GB-A- 1 447 488

According to the present invention there is provided apparatus for detecting combustible gaseous hydrocarbons comprising a chamber for receiving samples of an atmosphere to be checked for the presence of gaseous hydrocarbon content and an electrical circuit part of which is formed by first and second pellistors housed within the chamber, one of said pellistors incorporating a catalytic coating capable of catalysing the oxidation of hydrocarbons, characterised in that the electrical circuit comprises a constant current source delivering its current output to the pellistors which are series connected and, in parallel therewith, to a pair of reference resistors which are series connected and of high value with respect to the pellistor resistance, first voltage measuring means being connected between the inter-pellistor junction and the inter-resistor junction to provide a first measurement of combustible hydrocarbon content at concentration levels below the upper explosive limit, and second voltage measuring means being connected across the other of said pellistors to provide a second measurement of hydrocarbon content at concentrations below and above the upper explosive limit.

Preferably, a single measurement display device is provided having a gated input whereby only the output of one measuring means is displayed at a time.

An embodiment of the present invention will now be described by way of example with reference to the accompanying schematic drawing.

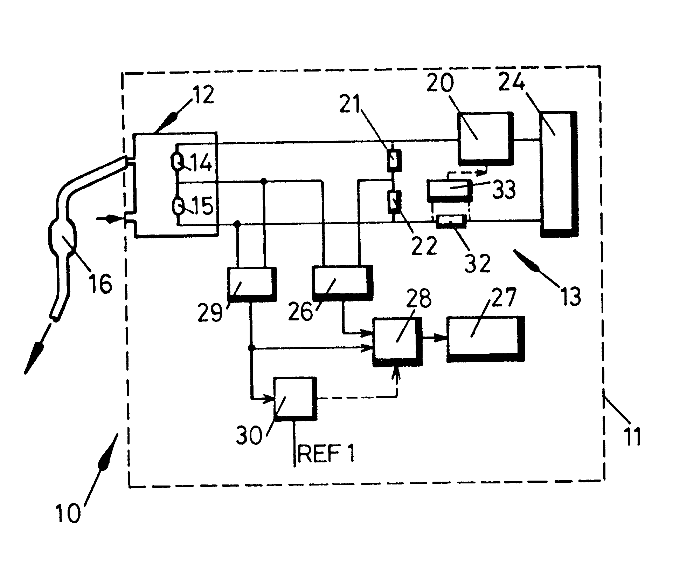

As is shown in the drawing apparatus 10 comprises an instrument case 11 within which is located a gas chamber 12 and an electrical circuit 13 part of which is formed by first and second pellistors 14, 15 housed within the chamber 12. Chamber 12 is provided with an inlet port and outlet port, to the latter of which is connected a flexible tube incorporating a hand pump 16 whereby samples of an atmosphere to be checked for the presence of gaseous hydrocarbon content are drawn through the chamber 12 so as to envelop the pellistors 14, 15.

Electrical circuit 13 primarily comprises a constant current source 20 delivering its current output to the pellistors 14, 15 which are series connected and, in parallel therewith, to a pair of reference resistors 21, 22, which are series connected. The nominal value of each resistor 21,22 is several orders of magnitude greater than that of each pellistor 14, 15 so that despite variations in resistance value of the pellistors 14, 15 due to the effects of detected gas, as will be explained, the current through the pellistors 14, 15 essentially remains constant. Pellistors 14, 15 are generally similar in shape, volume and electrical resistance to each other but pellistor 14 is provided with a catalytic coating which is effective at gas concentrations below the upper explosive limit to cause combustion of the gas on the surface of pellistor 14. Pellistor 15 does not possess this catalytic coating.

A power supply 24 is provided to energise current source 20, supply 24 normally being in the form of dry batteries, and in order to derive measurement outputs of gaseous hydrocarbon content a high impedance differential voltage amplifier 26 is connected between the junction of pellistors 14, 15 and the junction of reference resistors 21, 22, the output of amplifier 26 being delivered to a meter 27 (or other form of visual display unit) via a gating device 28. A second measurement output is obtained from a high impedance voltmeter 29 (and which may also incorporate an amplifier) the output of which is delivered to meter 27 via gating device 28. Gating device 28 delivers only one of its inputs to the meter 27 and selection of which input is so delivered is effected by a comparator 30 which compares one output voltage level against a reference level (Ref 1) and controls the operation of device 28 according to a predetermined algorithm-mas will be explained. Conveniently the reference level Ref 1 is compared against the output of voltmeter 29. Also, an autoranging facility can be provided by comparator 30.

In operation of the apparatus 10 power supply 24 is initially switched on so as to energise current source 20. When the atmosphere within chamber 12 is air, both pellistors 14, 15 function as constant resistors, as do resistors 21,22, the latter being sized relative to the pellistors 14, 15 so that the amplifier 26 provides a zero output signal. Voltmeter 29 detects a constant voltage which is conveniently offset within voltmeter 29 to provide a zero output signal. Since the output of voltmeter 29 is less in value than Ref 1 comparator 30 causes gating device 28 to direct the output of amplifier 26 to meter 27 which therefore displays an output of zero. When the atmosphere within chamber 12 contains a small quantity of detectable gaseous hydrocarbon, such as methane, the catalytic coating provided as part of pellistor 14 but not present in pellistor 15 causes combustion of the gas on the surface of pellistor 14 resulting in heat being applied to pellistor 14 thereby increasing the resistance of pellistor 14. Because the current applied to the series connection of pellistors 14, 15 is constant the voltage across the pellistors and the voltage at the junction of pellistors 14, 15 changes and because resistors 21, 22 are connected in parallel with the pellistors 14, 15 there is a small change in voltage value at the junction of the resistors 21, 22. The voltage change at the junction of resistors 21, 22 is half the voltage change across the pair of pellistors 14, 15 when the resistors 21, 22 are of equal value. Accordingly, amplifier 26 detects a changed differential input voltage giving rise to an output voltage signal capable of being displayed by meter 27. In accordance with the known operation of pellistor 14 this voltage signal is proportional to the concentration of combustible gas in the gas sample so that the meter can be scaled to provide a reading of gas concentration. Also, because pellistor 15 remains unaffected by the catalytic action of pellistor 14 voltmeter 29 continues to provide a substantially zero output signal and it is the output of amplifier 26 which is transmitted through gating device 28 to meter 27 because the voltage level of the voltmeter 29 output remains below that of Ref 1. However, pellistor 15 is subjected to the thermal conductivity of the sampled gas, which results in small changes in pellistor resistance even below the upper explosive limit (UEL) concentration. Accordingly, the value of Ref 1 is set to a value below the upper explosive limit concentration (conveniently, about twice the lower explosive limit concentration) and consequently when the output signal from the voltmeter 29 exceeds the set level of concentration comparator 30 causes gating device 28 to direct the output of voltmeter 29 to be displayed on meter 27.

As the concentration level of the combustible gas within chamber 12 increases substantially beyond the UEL and the catalytic action of pellistor 14 is quenched due to lack of oxygen the thermal conductivity of the gas stream through chamber 12 noticeably affects the heat loss from both pellistors 14, 15. This gives rise to a change in resistance of both pellistors 14, 15 but because they are provided with a constant current and voltmeter 29 only detects the voltage acrosss pellistor 15 the increased resistance of pellistor 15 is detected as an increased output voltage signal from voltmeter 29 which is displayed by meter 27. As is already known this voltage signal is proportional to the concentration of gas in the gas sample.

It will now be appreciated that the apparatus 10 is capable of measuring both volume gas and L.E.L. with a reduced number of active and matched components than hitherto, namely with only tow pellistors 14, 15.

As is shown in phantom, current source 20 may be autocontrolled to compensate for changes in ambient conditions by provision of a low-value current sensing resistor 32 having similar characteristics to pellistor 15. The voltage developed across resistor 32 is measured by meter 33 to provide a control signal to current source 20. Ambient conditions giving rise to an increase in resistance of resistor 32 cause the control signal level to increase leading to a reduction in value of the current level delivered by source 20.

The current source 20 may conveniently operate on a d.c. basis but for the purpose of conserving energy in the batteries of power supply 24 it is preferred that current source 20 operates in a pulsed mode with an on-to-off time ratio (i.e. mark-space ratio) of constant RMS value. Of course, the period of the pulsed mode waveform required to be substantially less than the thermal time constant of pellistors 14, 15.

With regard to hand pump 16 it will be appreciated that this pump could be motorised, conveniently electrically, and located within instrument case 11. Pump 16 could alternatively be connected to the inlet port of chamber 12 either in its hand-operated or motorised form. Also, where the apparatus 10 is static pump 16 may be dispensed with and the ports of chamber 12 enlarged to permit diffusion of the atmosphere to be checked through the chamber 12.

## Claims

1. Apparatus for detecting combustible gaseous hydrocarbons comprising a chamber (12) for receiving samples of an atmosphere to be checked for the presence of gaseous hydrocarbon content and an electrical circuit (13) part of which is formed by first (14) and second (15) pellistors housed within the chamber (12), one of said pellistors (14) incorporating a catalytic coating capable of catalysing the oxidation of hydrocarbons, characterized in that the electrical circuit (13) comprises a constant current source (20) delivering its current output to the pellistors (14,15) which are series connected and, in parallel therewith, to a pair of reference resistors (21,22) which are series connected and of high value with respect to the pellistor resistance, first voltage measuring means (26) being connected between the inter-pellistor junction and the inter-resistor junction to provide a first measurement of combustible hydrocarbon content at concentration levels below the upper explosive limit, and second voltage measuring means (29) being connected across the other of said pellistors (15) to provide a second measurement of hydrocarbon content at concentrations below and above the upper explosive limit.

2. Apparatus as claimed in claim 1, characterized in that a single measurement display device (27) is provided having a gated input (28) whereby only the output of one measuring means (26,29) is displayed at a time.

3. Apparatus as claimed in claim 2, characterized in that the gated input (28) is controlled by a comparator (30) which compares the voltage output of the second voltage measuring means (29) against a reference level (Ref 1) and when the compared voltage level is less than the reference level the gated input (28) directs the voltage output of the first voltage measuring means (26) to the display device (27) and when the compared voltage level is grater than the reference level the gated input (28) directs the voltage output of the second measuring means (29) to the display device (27).

4. Apparatus as claimed in any preceding claim, characterised in that constant current source (20) is auto-controlled to compensate for changes in ambient conditions by provision of a current sensing resistor (32) and meter (33).

5. Apparatus as claimed in any preceding claim, characterised in that constant current source (20) operates in a pulsed mode with a mark-to-space ratio of constant RMS value, the pulsed mode waveform period being substantially less than the thermal time constant of the pellistors (14,15).

## Patentansprüche

1. Gerät zum Nachweis brennbarer gasförmiger Kohlenwasserstoffe mit einer Kammer (12) zur Aufnahme von Proben einer auf die Anwesenheit eines gasförmigen Kohlenwasserstoffgehaltes zu untersuchenden Atmosphäre und einem elektrischen Schaltkreis (13), von dem Teile durch einen ersten (14) und zweiten (15) Pellistor, untergebracht in der Kammer (12), gebildet ist, von denen der eine Pellistor (14) eine katalytische Beschichtung aufweist, die in der Lage ist, die Oxidation von Kohlenwasserstoffen zu katalysieren, dadurch gekennzeichnet,

daß der elektrische Schaltkreis (13) eine Konstantstromquelle (20) aufweist, die ihren Ausgangsstrom zu den Pellistoren (14, 15) speist, die in Reihe geschaltet sind und parallel zu in Reihe geschalteten Referenzwiderständen mit in bezug auf die Pellistorenwiderständen hohen Widerstandswerten liegen,

daß ein erstes Spannungsmeßmittel (26) vorgesehen ist, das zwischen dem Knotenpunkt beider Pellistoren und dem Knotenpunkt beider Widerstände anliegt, um eine erste Messung von brennbarem Kohlenwasserstoffgehalt bei einem Konzentrationsniveau zu liefern, das unterhalb der oberen explosiven Grenze liegt, und

daß ein zweites Spannungsmeßmittel (29) vorgesehen ist, das über den anderen Pellistor (15) geschaltet ist, um eine zweite Messung des Kohlenwasserstoffgehaltes bei Konzentrationen unterhalb und überhalb der oberen explosiven Grenze zu liefern.

2. Gerät nach Anspruch 1, dadurch gekennzeichnet, daß ein einziges Meßdisplay-Gerät (27) mit einem getorten Eingang (28) vorgesehen ist, wodurch zu einem Zeitpunkt nur der Ausgang eines der Meßmittel (26, 29) angezeigt wird.

3. Gerät nach Anspruch 2, dadurch gekennzeichnet, daß der getorte Eingang (28) von einem Komparator (30) gesteuert wird, welcher den Spannungsausgang des zweiten Spannungsmeßmittels mit einer Referenzspannung (Ref 1) vergleicht, daß, wenn der verglichene Spannungspegel kleiner ist als die Referenzspannung, der getorte Eingang (28) den Spannungsausgang des ersten Spannungsmeßmittels (26) an das Anzeige-Gerät (27) legt, und daß, wenn der verglichene Spannungspegel größer als die Referenzspannung ist, der getorte Eingang (28) den Spannungsausgang des zweiten Meßmittels (29) an das Anzeige-Gerät (27) legt.

4. Gerät nach einem der vorhergehenden Ansprüche, dadurch gekennzeichnet, daß die Konstantstromquelle (20) selbstgesteuert ist, um Änderungen der Umgebungsbedingungen zu kompensieren, durch die Bereitstellung eines Strom erfassenden Widerstandes (32) und Meßgerätes (33).

5. Gerät nach einem der vorhergehenden Ansprüche, dadurch gekennzeichnet, daß die Konstantstromquelle (20) in einem gepulsten Modus mit einer Tastrate von Konstanten RMS-Wert arbeitet, wobei die gepulste Wellenformperiode in diesem Modus wesentlich kleiner ist als die Wärme-Zeit-Konstante der Pellistoren ist.

**Revendications**

1. Dispositif pour détecter des hydrocarbures gazeux combustibles, comprenant une chambre (12) destinée à recevoir des échantillons d'une atmosphère, dans laquelle on doit contrôler la présence d'une teneur en hydrocarbures gazeux, et un circuit électrique (13), dont une partie est formée par des premiers pellistors (14) et des seconds pellistors (15) logés dans la chambre (12), l'un desdits pellistors (14) comprenant un revêtement catalytique apte à catalyser l'oxydation d'hydrocarbures, caractérisé en ce que le circuit électrique (13) comprend une source de courant constant (20) délivrant un courant de sortie aux pellistors (14,15), qui sont branchés en série et sont raccordés, en parallèle, à un couple de résistances de référence (21,22), qui sont branchées en série et possèdent une valeur élevée par rapport à la résistance des pellistors, des premiers moyens de mesure de tension (26) étant branchés entre la jonction entre les pellistors et la jonction entre les résistances pour former une première mesure de la teneur en hydrocarbures combustibles à des niveaux de concentration inférieurs à la limite supérieure explosive, et des seconds moyens de mesure de tension (29) branchés aux bornes de l'autre desdits pellistors (15) pour réaliser une seconde mesure de la teneur en hydrocarbures et des concentrations inférieures et supérieures à la limite supérieure d'explosion.

2. Dispositif selon la revendication 1, caractérisé en ce qu'il est prévu un seul dispositif d'affichage de mesure (27) possédant une entrée à transfert commandé (28), seule la sortie de l'un des moyens de mesure (26,29) étant affichée à un instant.

3. Dispositif selon la revendication 2, caractérisé en ce que l'entrée à transfert commandé (28) est commandée par un comparateur (30) qui compare la tension de sortie des seconds moyens de mesure de tension (29) à un niveau de référence (Ref 1) et, dans le cas où le niveau de tension comparé est inférieur au niveau de référence, l'entrée à transfert commandé (28) envoie la tension de sortie des premiers moyens de mesure de tension (26) au dispositif d'affichage (27) et, dans le cas où les niveaux de tension comparés sont supérieurs au niveau de référence, l'entrée à transfert commandé (28) envoie la tension de sortie des seconds moyens de mesure (29) au dispositif d'affichage (27).

4. Dispositif selon l'une quelconque des revendications précédentes, caractérisé en ce que la source de courant constant (20) est autocommandée de manière à compenser des variations des conditions ambiantes, grâce à la présence d'une résistance de détection de courant (32) et d'un appareil de mesure (33).

5. Dispositif selon l'une quelconque des revendications précédentes, caractérisé en ce que la source de courant constant (20) fonctionne selon un mode pulsé avec un rapport impulsion/espace entre impulsions possédant une valeur efficace constante, la période de la forme d'onde en mode pulsé étant nettement inférieure à la constante de temps thermique des pellistors (14,15).